# EUROPÄISCHE PATENTANMELDUNG

(11) **EP 4 365 458 A1**
(43) Veröffentlichungstag der Anmeldung: **08.05.2024**
(21) Anmeldenummer: 22383061.3
(22) Anmeldetag: 04.11.2022
(51) Int. Cl.: F16D 65/00, F16D 65/097

(54) **FEDER FÜR EINE BREMSBELAG-BAUGRUPPE EINER BREMSVORRICHTUNG**

(71) Anmelder: ZF AFTERMARKET IBERICA, S.L., 31591 Corella Navarra (ES)
(72) Erfinder: VIKULOV, Konstantin, 31591 Corella (ES); ORRANTIA SABORIT, Julen, 31591 Corella (ES)
(74) Vertreter: ZF Friedrichshafen AG

(57) **Zusammenfassung**

Feder 102 für eine Bremsbelag-Baugruppe 101 einer Bremsvorrichtung 100, insbesondere einer Scheibenbremse, wobei die Feder 102 dazu eingerichtet ist, auf ein Formschlusselement 103 einer Bremsbelag-Trägerplatte 104 geschoben zu werden, die Feder 102 umfassend eine Klemme 105 zur Befestigung der Feder 102 am Formschlusselement 103 sowie ein Stützteil 106 zur Abstützung und zum Gleiten an einem Bremssattel 107, wobei
- das Stützteil 106 der Feder 102 einen ersten Schenkel 13 aufweist, der dazu ausgebildet ist, dem Bremssattel 107 zugewandt zu sein, und der eine konkav gekrümmte Form aufweist, wobei, wenn die Bremsbelag-Trägerplatte 104 und die Feder 102 im Inneren des Bremssattels 107 installiert sind, der erste Schenkel 13 einen Verbindungsabschnitt zwischen einem zweiten Schenkel 12 und einem dritten Schenkel 14 bildet, die dazu eingerichtet sind, abstützend und gleitend am Bremssattel 107 zur Anlage zu kommen,
- die Klemme 105 der Feder 102 einen vierten Schenkel 1, einen fünften Schenkel 5 und einen sechsten Schenkel 8 aufweist, die so ausgelegt und angeordnet sind, dass sie, wenn die Bremsbelag-Trägerplatte 104 und die Feder 102 im Inneren des Bremssattels 107 installiert sind, der Bremsbelag-Trägerplatte 104 zugewandt sind, und
- die Feder 102 ferner einen Verbindungsschenkel 16 aufweist, der die Klemme 105 mit dem Stützteil 106 der Feder 102 einteilig verbindet. Ferner betrifft die Erfindung eine Bremsbelag-Baugruppe 101 sowie eine Bremsvorrichtung 100.

## Beschreibung

Die vorliegende Erfindung betrifft eine Feder für eine Bremsbelag-Baugruppe einer Bremsvorrichtung, insbesondere einer Scheibenbremse, wobei die Feder dazu eingerichtet ist, auf ein Formschlusselement einer Bremsbelag-Trägerplatte geschoben zu werden. Die Feder umfasst eine Klemme zur Befestigung der Feder am Formschlusselement sowie ein Stützteil zur Abstützung und zum Gleiten an einem Bremssattel oder einem Bremssattelgehäuse. In diesem Zusammenhang wird ferner eine Bremsbelag-Baugruppe sowie eine Bremsvorrichtung, insbesondere eine Scheibenbremse, beansprucht.

Scheibenbremsen dienen der Verlangsamung und dem Anhalten eines Kraftfahrzeugs durch Reibungskraft, die zwischen einer Reibfläche eines Bremsbelags und einem rotierenden Bauteil, also einer Bremsscheibe, entsteht. Die gängigste Ausführung einer Scheibenbremse umfasst zwei Bremsbeläge, auch Bremsklötze genannt, eine Bremsscheibe und einen Bremssattel, die alle an einem Ende einer Achse des Kraftfahrzeugs in einer Baugruppe installiert sind. An dem Ende der jeweiligen Achse können auch noch andere Fahrwerkskomponenten, wie Lenkung und Radaufhängung, installiert sein. Die beiden Bremsbeläge sind am Bremssattel angeordnet, der die Bremsscheibe auf beiden Seiten, also innen und außen, abdeckt. Die Bremsbeläge werden mit einer Reibmaterialoberfläche montiert, die der Bremsscheibe zugewandt ist und parallel zur Bremsscheibenoberfläche liegt, so dass sich die Scheibe ohne Reibung zwischen den beiden Klötzen frei drehen kann. Die gegenüberliegende Seite des Bremsbelags trägt eine metallische Trägerplatte oder Stützplatte, die von der Reibmaterialoberfläche weg, also nach außen, zeigt. Die Bremsscheibe ist drehfest mit dem Rad bzw. einer Radnabe des Kraftfahrzeugs verbunden, so dass sich das Rad und die Bremsscheibe mit der gleichen Geschwindigkeit drehen. Wenn die Bremse betätigt wird, werden die Bremsbeläge auf die Bremsscheibe gedrückt, so dass die Reibungskraft zwischen dem jeweiligen Bremsbelag und der Bremsscheibe die Rotationsgeschwindigkeit der Scheibe und des Rades bis zum vollständigen Stillstand reduziert.

Der Bremssattel hat in der Regel einen oder mehrere Kolben, die durch einen hydraulischen Kreislauf in der Richtung senkrecht zur Oberfläche der Trägerplatte bewegt werden können, wenn Druck auf ein Bremspedal des Kraftfahrzeugs ausgeübt wird. Diese Kolbenbewegung wird auf die Bremsbeläge übertragen, die sich der Scheibenoberfläche von beiden Seiten der Bremsscheibe nähern und so die Bremsscheibe festklemmen. Die Drehbewegung der Bremsscheibe erzeugt eine Gleitreibungskraft auf die Belagoberfläche, die über die Trägerplatte auf den Bremssattel übertragen wird.

Eine übliche Ausführung einer Trägerplatte besteht aus einem flachen, laminierten Metallblech mit einer Dicke von 5 bis 6 mm und einer peripheren, seitlichen Gegenform, die in den Bremssattel passt und Merkmale aufweist, die bei der Übertragung der Bremskraft am effektivsten sind. Es ist notwendig, dass die Trägerplatte eines Bremsbelags Kontaktflächen mit dem Bremssattel hat. Diese Kontaktflächen sind so konstruiert, dass sie den hohen mechanischen Kräften beim Bremsen standhalten. Um Bremsgeräusche, typischerweise "Klirrgeräusche" genannt, die bei Bewegung des Bremsbelags im Bremssattel entstehen, zu verringern, vorzugsweise ganz zu vermeiden, sind an den Kontaktflächen des Bremsbelags mit dem Bremssattel häufig Klammern, auch Clips genannt, oder elastische Federn angebracht. Solche Clips können verwendet werden, um die Bewegungen des Belags innerhalb des Bremssattels in allen Richtungen zu kontrollieren, und zwar typischerweise in tangentialer Richtung mit der Drehrichtung der Bremsscheibe und/oder in radialer Richtung mit der Drehrichtung der Bremsscheibe.

Die im Stand der Technik beschriebenen Klammern bestehen in der Regel aus laminiertem Stahl mit gekrümmten Formen, wobei die Schenkel beiden zu trennenden Oberflächen zugewandt sind. Der jeweilige Schenkel, der der Trägerplatte zugewandt ist, hat eine spezielle Form, um mit der Trägerplatte verbunden zu werden und diese zu stützen, wobei die geringste Freiheit besteht, gegen die Trägerplatte zu gleiten. Der dem Bremssattel zugewandte Schenkel ist so gestaltet, dass er gekrümmt ist und eine konvexe Kontaktfläche mit der Oberfläche des Bremssattels aufweist. Eine solche Konstruktion bewirkt, dass die Kräfte auf eine begrenzte Kontaktfläche konzentriert werden.

Die EP 2 072 850 A1 offenbart Beispiele für elastische Klammern, die an der Trägerplatte angebracht sind, um die Unterseite des Vorsprungs der Bremsbelag-Trägerplatte von der Unterseite des Bremssattels zu trennen. Wenn die jeweilige elastische Klammer bzw. Feder im Bremssattel montiert ist, verhindert sie den direkten Kontakt zwischen den unteren Seitenflächen der Trägerplatte und der oberen Fläche des Bremssattels und vermeidet so die genannten "klirrenden Geräusche", wenn eine Bremskraft aufgebracht wird, um das Fahrzeug zu verzögern.

Der vorliegenden Erfindung liegt die Aufgabe zu Grunde, eine Feder für eine Bremsbelag-Baugruppe, eine Bremsbelag-Baugruppe für eine Bremsvorrichtung sowie eine Bremsvorrichtung mit verbesserten NVH-Eigenschaften (im Englischen "Noise, Vibrations and Harshness" bzw. im Deutschen "Geräusch, Vibration, Rauigkeit") vorzuschlagen. Die Aufgabe wird gelöst durch den Gegenstand der Patentansprüche 1, 12 und 14. Weitere vorteilhafte Ausführungsformen sind den abhängigen Ansprüchen zu entnehmen.

Die grundlegende Realisierung dieser Erfindung besteht darin, die konvexe Form der Kontaktfläche zwischen der Feder und dem Bremssattel in eine flache Form oder eine konkave Form zu ändern. Diese Ausführung verbessert die Stabilität der Kontaktflächen und reduziert die Möglichkeit von Schwingungen oder Verdrehungen der Teile. Mithin werden die NVH-Eigenschaften verbessert, die zu einem besseren Fahrgefühl führen.

Gemäß einem ersten Erfindungsaspekt wird eine Feder für eine Bremsbelag-Baugruppe einer Bremsvorrichtung, insbesondere einer Scheibenbremse, vorgeschlagen, wobei die Feder dazu eingerichtet ist, auf ein Formschlusselement einer Bremsbelag-Trägerplatte geschoben zu werden, die Feder umfassend eine Klemme zur Befestigung der Feder am Formschlusselement sowie ein Stützteil zur Abstützung und zum Gleiten an einem Bremssattel, wobei
- das Stützteil der Feder einen ersten Schenkel aufweist, der dazu ausgebildet ist, dem Bremssattel zugewandt zu sein, und der eine konkav gekrümmte Form aufweist, wobei, wenn die Bremsbelag-Trägerplatte und die Feder im Inneren des Bremssattels installiert sind, der erste Schenkel einen Verbindungsabschnitt zwischen einem zweiten Schenkel und einem dritten Schenkel bildet, die dazu eingerichtet sind, abstützend und gleitend am Bremssattel zur Anlage zu kommen,
- die Klemme der Feder einen vierten Schenkel, einen fünften Schenkel und einen sechsten Schenkel aufweist, die so ausgelegt und angeordnet sind, dass sie, wenn die Bremsbelag-Trägerplatte und die Feder im Inneren des Bremssattel installiert sind, der Bremsbelag-Trägerplatte zugewandt sind, und
- die Feder ferner einen Verbindungsschenkel aufweist, der die Klemme mit dem Stützteil der Feder einteilig verbindet.

Die Feder ist als Klammer, insbesondere als Bremsbelagklammer, bzw. als Clip einer Bremsbelag-Baugruppe zu verstehen. Diese Begriffe sind synonym zu verstehen. Die Feder dient dazu, die Bremsbelag-Trägerplatte der Bremsbelag-Baugruppe vom Bremssattel zu trennen und die Neigung zu Bremsgeräuschen und Vibrationen zu verringern. Mithin ist die Feder dazu vorgesehen, beide Metallteile, also einerseits die Bremsbelag-Trägerplatte und andererseits den Bremssattel, voneinander zu entkoppeln, insbesondere wenn sie in dem Bremssattel entlang der radialen Richtung der Rotationsachse der Bremsscheibe montiert sind. Eine direkte Kontaktierung der Bremsbelag-Trägerplatte mit dem Bremssattel wird verhindert.

Die Feder weist eine Vielzahl miteinander einteilig verbundener Schenkel auf, wobei in der Längserstreckung der Feder im Wesentlichen flache und im Wesentlichen gebogene bzw. gekrümmte Schenkel abwechselnd hintereinander gereiht angeordnet sind. Auf jeden gekrümmten Schenkel folgt bevorzugt ein flacher Schenkel, und umgekehrt. Die Schenkel der Feder sind einteilig miteinander verbunden und bilden die Feder aus. Die Schenkel der Feder sind derart ausgebildet, dass die Feder im Wesentlichen eine S-Form ausbildet. Die Feder weist zum einen Schenkel auf, die so ausgeformt und angeordnet sind, dass sie in Kontakt mit dem Formschlusselement der Bremsbelag-Trägerplatte stehen. Dies sind die Schenkel der Klemme der Feder. Ferner weist die Feder Schenkel auf, die so ausgeformt und angeordnet sind, dass sie in Kontakt mit dem Bremssattel stehen. Dies sind die Schenkel des Stützteils der Feder.

Die Feder ist gebildet durch die Klemme, die die Feder im montierten Zustand der Bremsbelag-Baugruppe an der Bremsbelag-Trägerplatte befestigt, das Stützteil, das die Feder im montierten Zustand der Bremsbelag-Baugruppe am Bremssattel abstützt, und den Verbindungsschenkel, der einen oder mehrere miteinander verbundene Schenkel aufweisen kann und die Klemme mit dem Stützteil einteilig verbindet. Mit anderen Worten kann der Verbindungsschenkel aus mehreren flachen und/oder gekrümmten Schenkeln ausgebildet sein.

Das Formschlusselement der Bremsbelag-Trägerplatte ist eine Öse oder ein Vorsprung an der Bremsbelag-Trägerplatte, die in Umfangsrichtung eines rotierenden Teils, insbesondere der Bremsscheibe, hervorsteht. An diesem Formschlusselement ist die Feder angebracht, insbesondere aufgeklemmt, um die Bremsbelag-Trägerplatte vom Bremssattel zu trennen. Das Formschlusselement ist folglich ein seitlicher Vorsprung der Bremsbelag-Trägerplatte.

Der zweite und dritte Schenkel der Feder, die über den ersten Schenkel miteinander verbunden sind, dienen als Kontaktierungsabschnitte zur Abstützung und zum Gleiten der Feder am Bremssattel. Der erste Schenkel am Stützteil der Feder kommt im montierten Zustand der Bremsbelag-Baugruppe aufgrund seiner konkav gekrümmten Form nicht in Kontakt mit dem Bremssattel. Anders gesagt ist der erste Schenkel derart gekrümmt ausgebildet, dass im montierten Zustand der Bremsbelag-Baugruppe ein Spalt zwischen dem ersten Schenkel und dem Bremssattel ausbildet. Das Stützteil stützt sich lediglich über den zweiten und dritten Schenkel am Bremssattel ab. Diese Form des Stützteils ist vorteilhaft, um sicherzustellen, dass die Kontakte mit der Oberfläche des Bremssattels in zwei verschiedenen Bereichen liegen, die durch die Länge des bogenförmigen, ersten Schenkels voneinander getrennt und beabstandet sind. Indem zwei Kontaktierungspunkte anstatt nur einem vorgesehen sind, kann eine bessere Abstützung der Feder an der Bremsbelag-Trägerplatte, und umgekehrt realisiert werden.

Vorzugsweise ist die Feder aus Metall, insbesondere aus einem rostfreien, laminierten Flachband, ausgebildet. Die Feder ist bevorzugt aus Edelstahl ausgebildet. Dadurch ist die Feder einfach und kostengünstig herstellbar. Die Feder ist vorteilhafterweise durch Walzen, Stanzen und Umformen hergestellt. Die Feder hat nach einem Ausführungsbeispiel einen im Wesentlichen rechteckigen Querschnitt. Vorzugsweise weist die Feder eine Dicke zwischen 0,5 mm und 1,0 mm, insbesondere zwischen 0,6 mm und 0,8 mm auf. Bevorzugt weist die Feder eine Breite zwischen 2 mm und 5 mm, insbesondere zwischen 2,5 mm und 4,0 mm auf. Vorzugsweise sind die Breite und/oder die Dicke der Feder entlang ihrer Längsausdehnung, das heißt in einer gedachten Abwicklung der Feder, im Wesentlichen konstant. Die Feder ist in diesem Sinn vorzugsweise frei von Löchern, Vorsprüngen und/oder Rillen auf der Oberfläche ausgebildet.

Bevorzugt ist die Feder derart ausgebildet, dass sie im montierten Zustand formschlüssig mit der Bremsbelag-Trägerplatte verbunden ist. Mit anderen Worten ist die Breite der Feder derart gewählt, dass ein Formschluss mit der Bremsbelag-Trägerplatte ausgebildet wird. Dazu kann die Bremsbelag-Trägerplatte beispielsweise eine Nut aufweisen, die im montierten Zustand der Bremsbelag-Baugruppe zur formschlüssigen Aufnahme der Feder, insbesondere einzelner oder aller Schenkel der Klemme der Feder, ausgebildet ist. In diesem Sinn ist die Breite der Feder so ausgelegt, dass sie eine wirksame formschlüssige Verbindung mit der Nutbreite des Formschlusselements bzw. des seitlichen Vorsprungs der Bremsbelag-Trägerplatte bildet.

Die Erfindung schließt die technische Lehre ein, dass der vierte Schenkel und/oder der fünfte Schenkel der Klemme derart ausgebildet ist bzw. sind, dass er bzw. sie flächig am Formschlusselement der Bremsbelag-Trägerplatte zur Anlage kommt bzw. kommen. Dadurch kann eine gleichmäßige Kraftübertragung zwischen der Feder und der der Bremsbelag-Trägerplatte ohne Spannungsspitzen erfolgen. Mithin ist die Feder dadurch besser an der Bremsbelag-Trägerplatte abgestützt, und umgekehrt.

Vorzugsweise sind im montierten Zustand der Feder eine der Bremsbelag-Trägerplatte zugewandte Oberfläche des vierten Schenkels und eine der Bremsbelag-Trägerplatte zugewandte Oberfläche des fünften Schenkels mit einem Winkel von 90° zueinander angeordnet. Die ist von Vorteil, um im montierten Zustand der Bremsbelag-Baugruppe in der Bremsvorrichtung eine sichere Verbindung zwischen der Bremsbelag-Trägerplatte und der Klemme zu gewährleisten.

Bevorzugt ist ein Öffnungsabstand zwischen dem vierten Schenkel und dem sechsten Schenkel kleiner ist als eine Dicke der Bremsbelag-Trägerplatte. Damit wird sichergestellt, dass die Feder durch elastische Verformung der Schenkel der Klemme fest mit der Bremsbelag-Trägerplatte verbunden ist, wenn die Feder an die Bremsbelag-Trägerplatte montiert wird. In einer bevorzugten Ausführungsform ist der Öffnungsabstand 0,5 bis 1,5 mm kleiner als die Dicke der Bremsbelag-Trägerplatte.

Nach einem Ausführungsbeispiel ist an einer dem ersten Schenkel entgegengesetzten Seite des dritten Schenkels ein siebter Schenkel angeordnet, der in seiner Längserstreckung kürzer ausgebildet ist als der vierte Schenkel. Damit wird sichergestellt, dass es im montierten Zustand der Bremsbelag-Baugruppe zu keinem Kontakt zwischen dem siebten Schenkel und dem fünften Schenkel oder einem anderen Schenkel der Klemme kommt.

Gemäß einem zweiten Erfindungsaspekt wird eine Bremsbelag-Baugruppe für eine Bremsvorrichtung vorgeschlagen, umfassend wenigstens eine Feder gemäß dem ersten Erfindungsaspekt, wobei die Feder an einer Bremsbelag-Trägerplatte angeordnet ist. Die Bremsbelag-Baugruppe umfasst neben der jeweiligen Feder also eine oder mehrere Bremsbelag-Trägerplatte, an denen jeweils ein Bremsbelag angeordnet ist. Vorzugsweise ist jede Bremsbelag-Trägerplatte über zwei Federn am Bremssattel aufgenommen. Der Bremssattel kann ein Bremssattelgehäuse oder Teil eines Bremssattelgehäuses sein.

Vorzugsweise weist die Bremsbelag-Trägerplatte eine Nut aufweist, die dazu ausgebildet ist, einen Schenkel der Klemme derart formschlüssig aufzunehmen, dass eine Bewegung der Bremsbelag-Trägerplatte relativ zur Feder, und umgekehrt, in Umfangsrichtung einer Bremsscheibe der Bremsvorrichtung verhindert wird. Bevorzugt nimmt die Nut den vierten Schenkel der Feder wenigstens teilweise auf, um den Formschluss zu erzeugen.

Nach einem dritten Erfindungsaspekt wird eine Bremsvorrichtung vorgeschlagen, umfassend eine Bremsbelag-Baugruppe gemäß dem zweiten Erfindungsaspekt. Die Bremsvorrichtung ist bevorzugt als Scheibenbremse ausgebildet. Die Bremsvorrichtung weist das Bremssattel auf, in dem im montierten Zustand die Bremsbelag-Baugruppe sowie eine Bremsscheibe angeordnet ist, die bei entsprechender Betätigung der Bremsvorrichtung in Reibkontakt mit den Bremsbelägen der Bremsbelag-Baugruppe bringbar ist. Die Bremsvorrichtung bzw. Scheibenbremse umfasst bevorzugt zwei Bremsklötze, die jeweils durch eine Bremsbelag-Trägerplatte und einen daran angeordneten Bremsbelag gebildet sind, eine Bremsscheibe und einen Bremssattel. Die beiden Bremsbeläge sind am Bremssattel angeordnet, der die Bremsscheibe auf beiden Seiten quer zur Fahrtrichtung, also innen und außen, abdeckt.

Die obigen Definitionen sowie Ausführungen zu technischen Effekten, Vorteilen und vorteilhaften Ausführungsformen der erfindungsgemäßen Feder gemäß dem ersten Erfindungsaspekt gelten sinngemäß ebenfalls für die erfindungsgemäße Bremsbelag-Baugruppe sowie für die erfindungsgemäße Bremsvorrichtung gemäß dem dritten Erfindungsaspekt, und umgekehrt. Es versteht sich, dass Merkmale der vorstehend bzw. in den Ansprüchen und/oder Figuren beschriebenen Lösungen ggf. auch kombiniert werden können, um die vorliegend erzielbaren Vorteile und Effekte kumuliert umsetzen zu können.

Im Folgenden wird ein bevorzugtes Ausführungsbeispiel der Erfindung anhand der Figuren näher erläutert, wobei gleiche oder ähnliche Elemente mit dem gleichen Bezugszeichen versehen sind. Hierbei zeigt
- Fig. 1: eine schematische Schnittdarstellung einer erfindungsgemäßen Bremsvorrichtung in Form einer Scheibenbremse,
- Fig. 2: eine schematische Perspektivdarstellung eines Bremsklotzes einer nur teilweise dargestellten erfindungsgemäßen Bremsbelag-Baugruppe der Bremsvorrichtung nach Fig. 1,
- Fig. 3: eine erste detaillierte Perspektivdarstellung des Bremsklotzes nach Fig. 2,
- Fig. 4: eine zweite detaillierte Perspektivdarstellung des Bremsklotzes nach Fig. 2 und Fig. 3,
- Fig. 5: eine dritte detaillierte Perspektivdarstellung des Bremsklotzes nach Fig. 2 bis Fig. 4,
- Fig. 6: eine stark schematische Schnittdarstellung der teilweise dargestellten Bremsvorrichtung nach Fig. 1 in einem montierten Zustand der Bremsbelag-Baugruppe nach Fig. 2 bis Fig. 5,
- Fig. 7: eine schematische Perspektivdarstellung einer erfindungsgemäßen Feder der Bremsbelag-Baugruppe nach Fig. 1 bis Fig. 6 vor der Montage, und
- Fig. 8: eine schematische Ansicht der erfindungsgemäßen Feder der Bremsbelag-Baugruppe nach Fig. 7 vor der Montage.

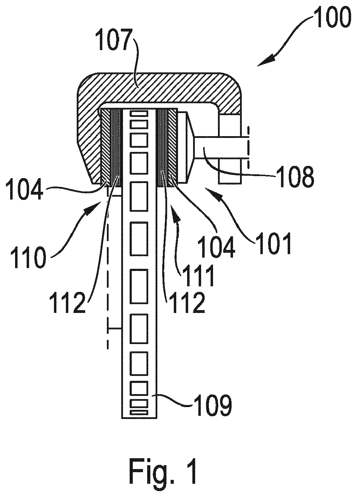

Gemäß Fig. 1 ist eine erfindungsgemäße Bremsvorrichtung 100 in Form einer Scheibenbremse dargestellt, die mechanisch betätigbar ist. Die Scheibenbremse 100 weist einen Bremssattel 107 auf, welcher in an sich bekannter Weise eine U-Querschnittsform besitzt. Der Bremssattel 107 umfasst an dem in Fig. 1 rechten Schenkel einen durch eine mechanische Betätigung verschiebbarer Betätigungsstößel 108, der in einem - hier nicht gezeigten - Zylinder geführt ist. Der Betätigungsstößel 108 ist in Richtung einer Bremsscheibe 109 oder von dieser abgewandt bewegbar, so dass ein äußerer Bremsklotz 110 und ein innerer Bremsklotz 111 an die Bremsscheibe 109 angepresst bzw. von dieser gelöst werden können. Der Zylinder wirkt als Reaktionselement, welches bei mechanischer Betätigung der Scheibenbremse 100 an der zugewandten Reaktionsfläche des Bremssattels 107 zur Wirkung gelangt, derart, dass sowohl der Außenbremsbelag als auch der Innenbremsbelag der entsprechenden Bremsklötze 110, 111 im Wesentlichen gleichzeitig angepresst werden können.

Der jeweilige Bremsklotz 110, 111 ist aus einer jeweiligen Bremsbelag-Trägerplatte 104 und einem dazugehörigen Bremsbelag 112 gebildet, wobei der jeweilige Bremsbelag 112 räumlich zwischen der Bremsscheibe 109 und dem jeweiligen Bremsbelag-Trägerplatte 104 angeordnet ist. Die Bremsscheibe 109 ist zwischen den beiden Bremsbelägen 112 angeordnet. Die Bremsklötze 110, 111 sind Teil einer erfindungsgemäßen Bremsbelag-Baugruppe 101.

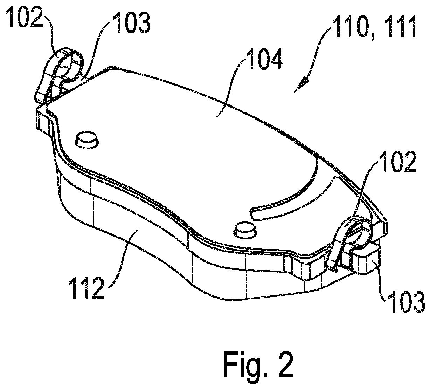

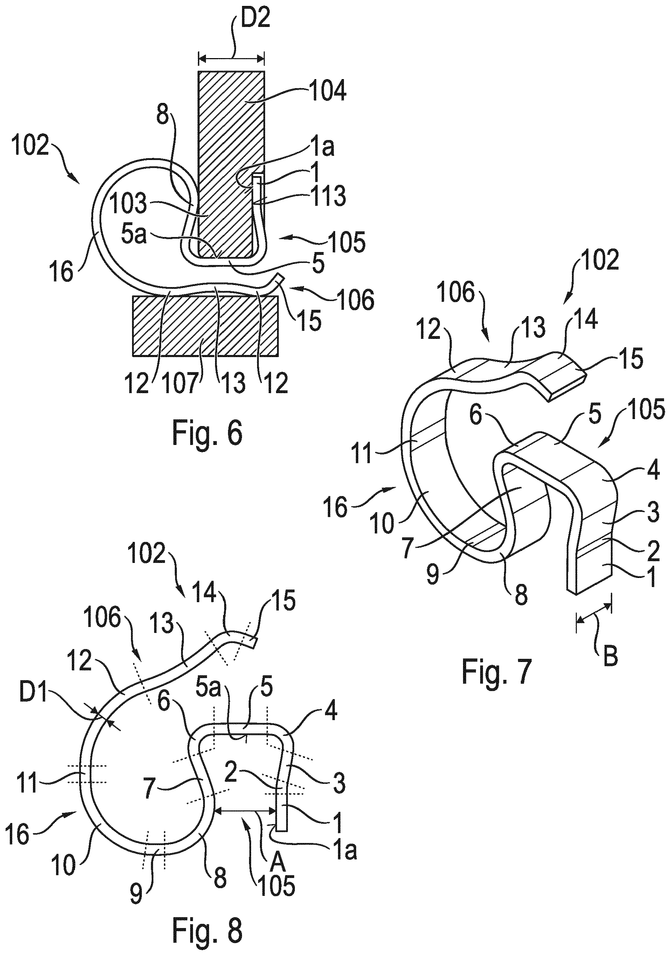

An in Umfangsrichtung der Bremsscheibe 109 entgegengesetzten Seiten der Bremsbelag-Trägerplatte 104 des jeweiligen Bremsklotzes 110, 111 sind gemäß Fig. 2 bis Fig. 5 in Verbindung mit Fig. 1 und Fig. 6 Formschlusselemente 103 angeformt, die einteilig mit der übrigen Bremsbelag-Trägerplatte 104 des jeweiligen Bremsklotzes 110, 111 verbunden sind. Das jeweilige Formschlusselement 103 ist ein seitlicher Vorsprung der Bremsbelag-Trägerplatte 104. An den Formschlusselementen 103 sind jeweils eine erfindungsgemäße Feder 102 wirksam angeordnet ist. Die jeweilige Feder 102 ist dazu eingerichtet ist, auf das dazugehörige Formschlusselement 103 der Bremsbelag-Trägerplatte 104 geschoben zu werden, wobei die jeweilige Feder 102 derart ausgebildet und angeordnet ist, dass die Bremsbelag-Trägerplatte 104 gemäß Fig. 6 am Bremssattel 107 gleitend abgestützt ist. Die jeweilige Bremsbelag-Trägerplatte 104 wird also durch die beiden daran befestigten Federn 102 vom Bremssattel 107 entkoppelt, wodurch die Neigung zu Bremsgeräuschen und Vibrationen bei Betätigung der Bremsvorrichtung 100 verringert wird. Nachfolgend wird eines der Formschlusselemente 103 der Bremsbelag-Trägerplatte 104 exemplarisch betrachtet und dargestellt, wobei das jeweils andere Formschlusselement 103 derselben Bremsbelag-Trägerplatte 104 spiegelverkehrt dazu ausgebildet ist.

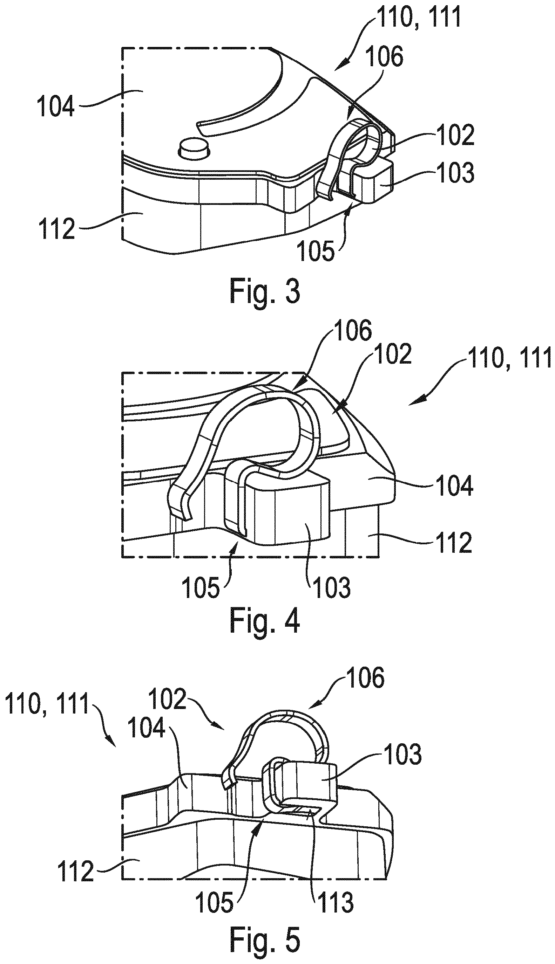

Nach Fig. 7 und Fig. 8 in Verbindung mit Fig. 3 bis Fig. 6 umfasst die Feder 102 eine Klemme 105, die zur Befestigung der Feder 102 am Formschlusselement 103 ausgebildet ist, sowie ein Stützteil 106, das zur Abstützung und zum Gleiten am Bremssattel 107 ausgebildet ist. Vorliegend besteht die Feder 102 aus fünfzehn Schenkeln, die teils flach, also ungekrümmt, und teils gekrümmt ausgebildet sind und so miteinander einteilig verbunden sind, dass die Feder 102 im Wesentlichen eine S-Form bildet. Die Feder 102 ist aus einem rostfreien, laminierten Flachband ausgebildet, hier aus Edelstahl, und weist einen rechteckigen Querschnittsprofil auf. In seiner gesamten Erstreckung weist die Feder 102 eine konstante Dicke D1 zwischen 0,6 mm und 0,8 mm und eine konstante Breite B zwischen 2,5 mm und 4,0 mm auf. Die Feder 102 ist zudem frei von Löchern, Vorsprüngen und/oder Rillen auf der Oberfläche ausgebildet.

Das Stützteil 106 der Feder 102 ist im montierten Zustand der Bremsbelag-Baugruppe 101 dem Bremssattel 107 zugewandt angeordnet. Die Feder 102 weist einen ersten Schenkel 13, einen zweiten Schenkel 12 und einen dritten Schenkel 14 auf, wobei der erste Schenkel konkav gekrümmt ausgebildet ist und den zweiten und dritten Schenkel 12, 14 einteilig miteinander verbindet. Insbesondere aus Fig. 6 geht hervor, dass, wenn die Bremsbelag-Trägerplatte 104 und die Feder 102 am bzw. im Bremssattel 107 montiert sind, der erste Schenkel 13 aufgrund der gebogenen Form nicht am Bremssattel 107 zur Anlage kommt, während der zweite und dritte Schenkel 12, 14 als Kontaktstellen zwischen Feder 102 und Bremssattel 107 dienen und entsprechend am Bremssattel 107 zur Anlage kommen. Die Schenkel 12, 14 sind derart ausgebildet und ausgeformt, dass ein Abgleiten der Feder 102 auf der Oberfläche des Bremssattels 107 möglich ist. Demnach ist der erste Schenkel 13 als Verbindungsabschnitt für den zweiten und dritten Schenkel 12, 14 zu verstehen. An einem dem ersten Schenkel 13 entgegengesetzten Seite des dritten Schenkels 14 ist ein siebter Schenkel 15 angeordnet, der kürzer ausgebildet ist als der vierte Schenkel 1. Damit wird ein zur Anlage kommen des Stützteils 106 an der Klemme 105 verhindert.

Die Klemme 105 der Feder 102 ist im montierten Zustand der Bremsbelag-Baugruppe 101 dem Formschlusselement 103 der Bremsbelag-Trägerplatte 104 zugewandt angeordnet. Die Klemme 105 umfasst einen vierten Schenkel 1, einen fünften Schenkel 5 und einen sechsten Schenkel 8, wobei die Schenkel 1, 5, 8 so ausgelegt und angeordnet sind, dass sie das Formschlusselement 103 umgreifen und die Feder 102 so an der Bremsbelag-Trägerplatte 104 befestigen. Mithin kommen, wenn die Bremsbelag-Trägerplatte 104 und die Feder 102 am bzw. im Bremssattel 107 montiert sind, die Schenkel 1, 5, 8 an der Bremsbelag-Trägerplatte 104 zur Anlage.

Die Feder 102 ist zudem im montierten Zustand formschlüssig mit der Bremsbelag-Trägerplatte 104 verbunden. Dazu weist die Bremsbelag-Trägerplatte 104 eine Nut 113 auf, die dazu ausgebildet ist, einen Schenkel der Klemme 105 formschlüssig aufzunehmen. Vorliegend ist die Nut 113 derart angeordnet, dass der vierte Schenkel 1 der Feder 102 in die Nut eingeführt ist und eine Relativbewegung der Feder 102 zur Bremsbelag-Trägerplatte 104, und umgekehrt in Umfangsrichtung der Bremsscheibe 109 verhindert.

Der vierte Schenkel 1 und der fünfte Schenkel 5 sind derart ausgebildet, dass sie flächig am Formschlusselement 103 der Bremsbelag-Trägerplatte 104 zur Anlage kommen. Im montierten Zustand der Feder 102 sind eine der Bremsbelag-Trägerplatte 104 zugewandte Oberfläche 1a des vierten Schenkels 1 und eine der Bremsbelag-Trägerplatte 104 zugewandte Oberfläche 5a des fünften Schenkels 5 mit einem Winkel von 90° zueinander angeordnet. Außerdem ist ein Öffnungsabstand A zwischen dem vierten Schenkel 1 und dem sechsten Schenkel 8 kleiner ist als eine Dicke D2 der Bremsbelag-Trägerplatte 104, sodass beim Aufklemmen der Feder 102 auf die Bremsbelag-Trägerplatte 104 eine Verspannwirkung realisiert wird und die Feder 102 sicher auf dem Formschlusselement 103 der Bremsbelag-Trägerplatte 104 sitzt.

Die Klemme 105 und das Stützteil 106 sind über einen Verbindungsschenkel 16 einteilig miteinander verbunden, wobei der Verbindungsschenkel 16 aus einem achten Schenkel 9, einem neunten Schenkel 10 und einem zehnten Schenkel 11 gebildet ist.

Zwischen dem vierten Schenkel 1 und dem fünften Schenkel 5 sind ein elfter Schenkel 2, ein zwölfter Schenkel 3 und ein dreizehnter Schenkel 4 angeordnet, die derart ausgeformt sind, dass sie nicht mit dem Formschlusselement 103 der Bremsbelag-Trägerplatte 104 in Kontakt treten.

Zwischen dem fünften Schenkel 5 und dem sechsten Schenkel 8 sind ein vierzehnter Schenkel 6 und ein fünfzehnter Schenkel angeordnet, die derart ausgeformt sind, dass sie nicht mit dem Formschlusselement 103 der Bremsbelag-Trägerplatte 104 in Kontakt treten.

Gemäß einer gedachten Abwicklung der Feder 102 ist am vierten Schenkel 1 der elfter Schenkel 2, daran angrenzend der zwölfte Schenkel 3, daran angrenzend der dreizehnte Schenkel 4, daran angrenzend der fünfte Schenkel 5, daran angrenzend der vierzehnter Schenkel 6, daran angrenzend der fünfzehnte Schenkel 7, daran angrenzend der sechste Schenkel 8, daran angrenzend der achte Schenkel 9, daran angrenzend der neunte Schenkel 10, daran angrenzend der zehnte Schenkel 11, daran angrenzend der zweiter Schenkel 12, daran angrenzend der erste Schenkel 13, daran angrenzend der dritte Schenkel 14 und daran angrenzend der siebte Schenkel 15 einteilig angeformt.

Die Schenkel 1, 3, 5, 7, 9, 11 und 15 sind im Wesentlichen flach ausgebildet, während die Schenkel 2, 4, 6, 8, 10, 12, 13 und 14 im Wesentlichen gebogen ausgebildet sind.

### Bezugszeichen

- 1: Vierter Schenkel der Feder
- 1a: Oberfläche des vierten Schenkels
- 2: Elfter Schenkel der Feder
- 3: Zwölfter Schenkel der Feder
- 4: Dreizehnter Schenkel der Feder
- 5: Fünfter Schenkel der Feder
- 5a: Oberfläche des fünften Schenkels
- 6: Vierzehnter Schenkel der Feder
- 7: Fünfzehnter Schenkel der Feder
- 8: Sechster Schenkel der Feder
- 9: Achter Schenkel der Feder
- 10: Neunter Schenkel der Feder
- 11: Zehnter Schenkel der Feder
- 12: Zweiter Schenkel der Feder
- 13: Erster Schenkel der Feder
- 14: Dritter Schenkel der Feder
- 15: Siebter Schenkel der Feder
- 16: Verbindungsschenkel

- 100: Bremsvorrichtung bzw. Scheibenbremse
- 101: Bremsbelag-Baugruppe
- 102: Feder
- 103: Formschlusselement der Bremsbelag-Trägerplatte
- 104: Bremsbelag-Trägerplatte
- 105: Klemme der Feder
- 106: Stützteil der Feder
- 107: Bremssattel
- 108: Betätigungsstößel
- 109: Bremsscheibe
- 110: Äußerer Bremsklotz
- 111: Innerer Bremsklotz
- 112: Bremsbelag
- 113: Nut

- A: Öffnungsabstand
- B: Breite der Feder
- D1: Dicke der Feder
- D2: Dicke der Bremsbelag-Trägerplatte

## Patentansprüche

1. Feder (102) für eine Bremsbelag-Baugruppe (101) einer Bremsvorrichtung (100), insbesondere einer Scheibenbremse, wobei die Feder (102) dazu eingerichtet ist, auf ein Formschlusselement (103) einer Bremsbelag-Trägerplatte (104) geschoben zu werden, die Feder (102) umfassend eine Klemme (105) zur Befestigung der Feder (102) am Formschlusselement (103) sowie ein Stützteil (106) zur Abstützung und zum Gleiten an einem Bremssattel (107),
**dadurch gekennzeichnet, dass**
- das Stützteil (106) der Feder (102) einen ersten Schenkel (13) aufweist, der dazu ausgebildet ist, dem Bremssattel (107) zugewandt zu sein, und der eine konkav gekrümmte Form aufweist, wobei, wenn die Bremsbelag-Trägerplatte (104) und die Feder (102) im Inneren des Bremssattels (107) installiert sind, der erste Schenkel (13) einen Verbindungsabschnitt zwischen einem zweiten Schenkel (12) und einem dritten Schenkel (14) bildet, die dazu eingerichtet sind, abstützend und gleitend am Bremssattel (107) zur Anlage zu kommen,
- die Klemme (105) der Feder (102) einen vierten Schenkel (1), einen fünften Schenkel (5) und einen sechsten Schenkel (8) aufweist, die so ausgelegt und angeordnet sind, dass sie, wenn die Bremsbelag-Trägerplatte (104) und die Feder (102) im Inneren des Bremssattels (107) installiert sind, der Bremsbelag-Trägerplatte (104) zugewandt sind, und
- die Feder (102) ferner einen Verbindungsschenkel (16) aufweist, der die Klemme (105) mit dem Stützteil (106) der Feder (102) einteilig verbindet.

2. Feder (102) nach Anspruch 1, wobei die Feder (102) aus Metall ausgebildet ist.

3. Feder (102) nach Anspruch 2, wobei die Feder (102) aus einem rostfreien, laminierten Flachband ausgebildet ist.

4. Feder (102) nach einem der vorhergehenden Ansprüche, wobei der vierte Schenkel (1) und/oder der fünfte Schenkel (5) derart ausgebildet ist, dass er flächig am Formschlusselement (103) der Bremsbelag-Trägerplatte (104) zur Anlage kommt.

5. Feder (102) nach Anspruch 4, wobei im montierten Zustand der Feder (102) eine der Bremsbelag-Trägerplatte (104) zugewandte Oberfläche (1a) des vierten Schenkels (1) und eine der Bremsbelag-Trägerplatte (104) zugewandte Oberfläche (5a) des fünften Schenkels (5) mit einem Winkel von 90° zueinander angeordnet sind.

6. Feder (102) nach einem der vorhergehenden Ansprüche, aufweisend eine Dicke (D1) zwischen 0,5 mm und 1,0 mm.

7. Feder (102) nach einem der vorhergehenden Ansprüche, aufweisend eine Breite (B) zwischen 2 mm und 5 mm.

8. Feder (102) nach einem der vorhergehenden Ansprüche, wobei die Feder (102) derart ausgebildet ist, dass sie im montierten Zustand formschlüssig mit der Bremsbelag-Trägerplatte (104) verbunden ist.

9. Feder (102) nach einem der vorhergehenden Ansprüche, wobei die Feder (102) frei von Löchern, Vorsprüngen und/oder Rillen auf der Oberfläche ausgebildet ist.

10. Feder (102) nach einem der vorhergehenden Ansprüche, wobei ein Öffnungsabstand (A) zwischen dem vierten Schenkel (1) und dem sechsten Schenkel (8) kleiner ist als eine Dicke (D2) der Bremsbelag-Trägerplatte (104) ist.

11. Feder (102) nach einem der vorhergehenden Ansprüche, wobei an einer dem ersten Schenkel (13) entgegengesetzten Seite des dritten Schenkels (14) ein siebter Schenkel (15) angeordnet ist, der in seiner Längserstreckung kürzer ausgebildet ist als der vierte Schenkel (1).

12. Bremsbelag-Baugruppe (101) für eine Bremsvorrichtung (100), umfassend wenigstens eine Feder (102) nach einem der vorhergehenden Ansprüche, wobei die Feder an einer Bremsbelag-Trägerplatte (104) angeordnet ist.

13. Bremsbelag-Baugruppe (101) nach Anspruch 12, wobei die Bremsbelag-Trägerplatte (104) eine Nut (113) aufweist, die dazu ausgebildet ist, einen Schenkel (1) der Klemme (105) derart formschlüssig aufzunehmen, dass eine Bewegung der Bremsbelag-Trägerplatte (104) relativ zur Feder (102), und umgekehrt, in Umfangsrichtung einer Bremsscheibe (109) der Bremsvorrichtung (100) verhindert wird.

14. Bremsvorrichtung (100), insbesondere Scheibenbremse, umfassend eine Bremsbelag-Baugruppe (101) nach Anspruch 12 oder Anspruch 13.

## Geänderte Patentansprüche

### Geänderte Patentansprüche gemäss Regel 137(2) EPÜ.

1. Feder (102) für eine Bremsbelag-Baugruppe (101) einer Bremsvorrichtung (100), insbesondere einer Scheibenbremse, umfassend eine Klemme (105) zur Befestigung der Feder (102) an einer Bremsbelag-Trägerplatte (104) sowie ein Stützteil (106) zur Abstützung und zum Gleiten an einem Bremssattel (107), wobei das Stützteil (106) der Feder (102) einen ersten Schenkel (13) aufweist, der dazu ausgebildet ist, dem Bremssattel (107) zugewandt zu sein, und der eine konkav gekrümmte Form aufweist, wobei, wenn die Bremsbelag-Trägerplatte (104) und die Feder (102) im Inneren des Bremssattels (107) installiert sind, der erste Schenkel (13) einen Verbindungsabschnitt zwischen einem zweiten Schenkel (12) und einem dritten Schenkel (14) bildet, die dazu eingerichtet sind, abstützend und gleitend am Bremssattel (107) zur Anlage zu kommen,
**dadurch gekennzeichnet, dass** die Klemme (105) der Feder (102) zur Befestigung der Feder (102) an ein als seitlicher Vorsprung ausgebildetes Formschlusselement (103) der Bremsbelag-Trägerplatte (104) eingerichtet ist und dazu einen vierten Schenkel (1), einen fünften Schenkel (5) und einen sechsten Schenkel (8) aufweist, die so ausgelegt und angeordnet sind, dass sie, wenn die Bremsbelag-Trägerplatte (104) und die Feder (102) im Inneren des Bremssattels (107) installiert sind, der Bremsbelag-Trägerplatte (104) zugewandt sind, wobei die Feder (102) ferner einen Verbindungsschenkel (16) aufweist, der die Klemme (105) mit dem Stützteil (106) der Feder (102) einteilig verbindet.

2. Feder (102) nach Anspruch 1, wobei die Feder (102) aus Metall ausgebildet ist.

3. Feder (102) nach Anspruch 2, wobei die Feder (102) aus einem rostfreien, laminierten Flachband ausgebildet ist.

4. Feder (102) nach einem der vorhergehenden Ansprüche, wobei der vierte Schenkel (1) und/oder der fünfte Schenkel (5) derart ausgebildet ist, dass er flächig am Formschlusselement (103) der Bremsbelag-Trägerplatte (104) zur Anlage kommt.

5. Feder (102) nach Anspruch 4, wobei im montierten Zustand der Feder (102) eine der Bremsbelag-Trägerplatte (104) zugewandte Oberfläche (1a) des vierten Schenkels (1) und eine der Bremsbelag-Trägerplatte (104) zugewandte Oberfläche (5a) des fünften Schenkels (5) mit einem Winkel von 90° zueinander angeordnet sind.

6. Feder (102) nach einem der vorhergehenden Ansprüche, aufweisend eine Dicke (D1) zwischen 0,5 mm und 1,0 mm.

7. Feder (102) nach einem der vorhergehenden Ansprüche, aufweisend eine Breite (B) zwischen 2 mm und 5 mm.

8. Feder (102) nach einem der vorhergehenden Ansprüche, wobei die Feder (102) derart ausgebildet ist, dass sie im montierten Zustand formschlüssig mit der Bremsbelag-Trägerplatte (104) verbunden ist.

9. Feder (102) nach einem der vorhergehenden Ansprüche, wobei die Feder (102) frei von Löchern, Vorsprüngen und/oder Rillen auf der Oberfläche ausgebildet ist.

10. Feder (102) nach einem der vorhergehenden Ansprüche, wobei ein Öffnungsabstand (A) zwischen dem vierten Schenkel (1) und dem sechsten Schenkel (8) kleiner ist als eine Dicke (D2) der Bremsbelag-Trägerplatte (104) ist.

11. Feder (102) nach einem der vorhergehenden Ansprüche, wobei an einer dem ersten Schenkel (13) entgegengesetzten Seite des dritten Schenkels (14) ein siebter Schenkel (15) angeordnet ist, der in seiner Längserstreckung kürzer ausgebildet ist als der vierte Schenkel (1).

12. Bremsbelag-Baugruppe (101) für eine Bremsvorrichtung (100), umfassend wenigstens eine Feder (102) nach einem der vorhergehenden Ansprüche, wobei die Feder an einer Bremsbelag-Trägerplatte (104) angeordnet ist.

13. Bremsbelag-Baugruppe (101) nach Anspruch 12, wobei die Bremsbelag-Trägerplatte (104) eine Nut (113) aufweist, die dazu ausgebildet ist, einen Schenkel (1) der Klemme (105) derart formschlüssig aufzunehmen, dass eine Bewegung der Bremsbelag-Trägerplatte (104) relativ zur Feder (102), und umgekehrt, in Umfangsrichtung einer Bremsscheibe (109) der Bremsvorrichtung (100) verhindert wird.

14. Bremsvorrichtung (100), insbesondere Scheibenbremse, umfassend eine Bremsbelag-Baugruppe (101) nach Anspruch 12 oder Anspruch 13.
